# EUROPÄISCHE PATENTSCHRIFT

(11) **EP 0 616 324 B1**
(45) Veröffentlichungstag und Bekanntmachung des Hinweises auf die Patenterteilung: **03.02.1999**
(21) Anmeldenummer: 94103481.1
(22) Anmeldetag: 08.03.1994
(51) Int. Cl.: G11B 20/10

(54) **Digitales Aufzeichnungs- und Wiedergabegerät und Verfahren**
Digital recording and reproducing apparatus and method
Appareil et procédé d'enregistrement et de reproduction numérique

(30) Priorität: 18.03.1993 DE 4308617
(43) Veröffentlichungstag der Anmeldung: 21.09.1994
(73) Patentinhaber: DEUTSCHE THOMSON-BRANDT GMBH, 78048 Villingen-Schwenningen (DE)
(72) Erfinder: Zucker, Friedhelm, D-78052 Villingen-Schwenningen (DE); Büchler, Christian, D-78052 Villingen-Schwenningen (DE); Uhde, Dietmar, D-78126 Königsfeld (DE)
(74) Vertreter: Hartnack, Wolfgang, Dipl.-Ing.

(56) Entgegenhaltungen:
- GB-A- 2 223 876
- PATENT ABSTRACTS OF JAPAN vol. 014 no. 001 (P-985) ,8.Januar 1990 & JP-A-01 253873 (MATSUSHITA ELECTRIC IND CO LTD) 11.Oktober 1989,
- PATENT ABSTRACTS OF JAPAN vol. 014 no. 207 (P-1043) ,26.April 1990 & JP-A-02 044575 (MATSUSHITA ELECTRIC IND CO LTD) 14.Februar 1990,

## Beschreibung

Die Erfindung betrifft ein Verfahren und eine Anordnung für digitale Aufzeichnungs- und Wiedergabegeräte mit einem Digitalsignaleingang zum Aufzeichnen oder Umsetzen von unterschiedliche Abtastfrequenzen aufweisenden Digitalsignalen, wie beispielsweise MOD- oder DAT- Geräten.

In der Digitaltechnik ist die Abtastfrequenz, mit der ein analoges oder auch digitales Signal abgetastet wird, eine der wichtigsten Systemeigenschaften. Sie gibt an, wie schnell die einzelnen Abtastwerte aufeinanderfolgen und wird auch als Abtastrate oder Sampling-Frequenz bezeichnet. Um den vollen Informationsgehalt eines analogen Signals zu erfassen, wird die Abtastfrequenz gemäß dem in der Praxis bewiesenen Shannonschen Abtasttheorem mindestens doppelt so hoch wie die zu messende Frequenz gewählt. Audiosignale im Frequenzbereich bis 20 kHz würden somit eine Abtastfrequenz von 40 kHz erfordern. Für die einzelnen Aufzeichnungsträger und Übertragungsverfahren wurden jedoch unterschiedliche Abtastfrequenzen festgelegt. So beträgt beispielsweise die Abtastfrequenz:
44,1 kHz bei der Compact-Disc CD oder Minidisk,
48 kHz beim Digital Audio Tape DAT und
32 kHz beim Satellitenrundfunk.
Zur Verarbeitung von digitalen Signalen eines Systems mit einer ersten Abtastfrequenz in einem System mit einer zweiten Abtastfrequenz ist deshalb ein Abtastfrequenzumsetzer erforderlich. Hierzu stehen grundsätzlich zwei Wege zur Verfügung. Entweder wird das digitale Signal in ein analoges Signal umgewandelt und mit der zweiten Abtastfrequenz abgetastet oder es erfolgt mittels Rechner eine Umsetzung der Abtastfrequenz in der digitalen Ebene.
Hinsichtlich der Abtastfrequenzumsetzung über eine analoge Zwischenstufe besteht die Auffassung, daß sie zu Qualitätsverlusten führt und aufwendige D/A- und A/D- Umsetzer erfordert. Insbesondere wird davon ausgegangen, daß die zwischengeschaltete Analogstufe und die mehrfache Nutzung von Filtern die wesentlichen Vorteile der digitalen Signalverarbeitung zunichte machen, vgl. KRIEG, Bernhard: Praxis der digitalen Audiotechnik. In: Franzis-Arbeitsbuch 1989, S. 33. Analoge Übertragungsstrecken weisen trotz Standardisierung von Schnittstellen aufgrund der erforderlichen Aussteuerungsanpassung im Vergleich zur digitalen Übertragungsstrecke eine geringere Dynamik auf und Aufzeichnungsgeräte mit Analogsignaleingang verfügen deshalb in der Regel über ein Aussteuerungspotentiometer oder eine Aussteuerungsautomatik. Trotz Aussteuerungsregelung führt das ständige Nachregeln zu einem Verlust an Dynamik und wird die Übertragung durch Fremdsignaleinstreuungen nachteilig beeinflußt.

Die gegenüber Fremdsignaleinstreuungen nahezu unempfindliche Digitalsignalübertragung erfordert andererseits aufgrund unterschiedliche Abtastfrequenzen verwendender Aufzeichnungs- und Wiedergabegeräte einen Sampling Rate Converter bzw. digitalen Abtastfrequenzumsetzer, um beispielsweise von einem DAT-Recorder auf eine MOD oder Minidisk oder von einer CD auf einen DAT-Recorder eine Überspielung unter Verwendung eines digitalen Signals vornehmen zu können. Das bei der digitalen Abtastfrequenz- bzw. Abtastratenumsetzung verwendete Prinzip der linearen Interpolation erfordert einen bekanntermaßen hohen Aufwand. Der hohe Aufwand zur Realisierung eines digitalen Abtastfrequenzumsetzers resultiert dabei sowohl aus dem Verhältnis der Abtastraten als auch aus den möglichen Varianten, die ein Herabsetzen oder ein Heraufsetzen der Abtastfrequenz erfordern.
Aufgrund des für einen digitalen Abtastfrequenzumsetzer notwendigen Aufwands weisen einige Aufzeichnungs- und Wiedergabegeräte ausschließlich einen auch zur Aufzeichnung von Informationen mit einem Mikrofon vorgesehenen Anschluß für Analogsignale auf. Da die Analogsignalübertragung gegenüber einer Digitalsignalübertragung hinlänglich bekannte Nachteile aufweist, wird generell eine digitale Signalübertragung bevorzugt, insbesondere wenn eine digitale Signalquelle zur Verfügung steht.

GB-A-2 223 876, PATENT ABSTRACTS OF JAPAN, Vol.14, No. 1 (P-985), 8.Januar 1990, und JP-A-01 253873, 11.Oktober 1989 offenbaren die Möglichkeit, Digitalsignale einer bestimmten Abtastfrequenz mit einer unterschiedlichen Abtastfrequenz aufzuzeichnen und dabei zur Abtastfrequenz-Umsetzung einen ohnehin vorhandenen A/D- und D/A-Wandler zu verwenden.

Es ist Aufgabe der Erfindung, ein Gerät und ein Verfahren zur Aufzeichnung und Wiedergabe von Digitalsignalen anzugeben, welches mit geringerem Aufwand realisiert werden kann. Diese Aufgabe wird durch die in den Ansprüchen 1 und 6 angegebenen Merkmale gelöst.
Die abhängigen Ansprüche geben vorteilhafte Weiterbildungen der Erfindung an.

Die Erfindung geht davon aus, daß in einem digitalen Aufzeichnungs- und Wiedergabegerät der grundsätzlich vorhandene A/D- und D/A-Wandler in besonderer Weise zur Bildung eines Abtastfrequenz-Umsetzers verwendet werden, so daß ohne zusätzlichen Aufwand für einen Abtastfrequenz-Umsetzer und ohne digitalen Abtastfrequenz-Umsetzer bzw. Sampling Rate Converter das Aufzeichnen oder Umsetzen von unterschiedliche Abtastfrequenzen aufweisenden Digitalsignalen über einen Digitalsignal-Eingang ermöglicht wird. Hierzu werden dem zur Informationswiedergabe im Aufzeichnungs- und Wiedergabegerät vorhandenen D/A- Wandler das sich von der zur Aufzeichnung üblicher Weise im Aufzeichnungs- und Wiedergabegerät verwendeten Abtastfrequenz unterscheidende Digitalsignal zugeführt und der Ausgang des D/A- Wandlers mit dem Eingang des zur Informationsaufzeichnung im Aufzeichnungs- und Wiedergabegerät vorhandenen A/D- Wandlers über ein an die niedrigste Abtastfrequenz angepaßtes Filter verbunden. Die Anpassung des Filters an die niedrigste Abtastfrequenz kann durch Umschaltung realisiert werden. Um trotz dieser zur Abtastfrequenz-Umsetzung verwendeten analogen Zwischenstufe die Übertragungseigenschaften gegenüber einer digitalen Signalübertragung nicht nachteilig zu beeinflussen, ist weiterhin eine Verbindung zwischen den üblicherweise separat im D/A-Wandler und im A/D-Wandler erzeugten und sich unterscheidenden Referenzspannungen vorgesehen, die den Aussteuerbereich des A/D-bzw. D/A-Wandlers bestimmen.

Insbesondere durch eine für den A/D- und D/A- Wandler gemeinsam verwendete Referenzspannung und der dadurch erreichten Übereinstimmung ihrer Aussteuerbereiche werden Dynamikverluste vermieden. Darüber hinaus können der A/D- und D/A- Wandler im Aufzeichnungs- und Wiedergabegerät in unmittelbarer Nachbarschaft bzw. in einem Schaltkreis integriert sein, so daß eine Resistenz gegenüber Fremdsignaleinstreuungen ebenfalls gewährleistet werden kann. Das Vorurteil hinsichtlich der Nachteile der Verwendung einer analoge Signale verarbeitenden Zwischenstufe kann somit nicht aufrecht erhalten werden. Es können Aufzeichnungs- und Wiedergabegeräte realisiert werden, die in vorteilhafter Weise einen Digitalsignaleingang zur Aufzeichnung von Digitalsignalen unterschiedlicher Abtastfrequenz aufweisen und dennoch bei vergleichsweiser Qualität der Signalübertragung und Signalaufzeichnung eine analoge Signale verarbeitende Zwischenstufe verwenden und einen wesentlich geringeren Aufwand erfordern. Dies ist sowohl für Aufzeichnungs- und Wiedergabegeräte zutreffend, die als Speichermedium einen plattenförmigen Aufzeichnungsträger verwenden und gilt auch für bandförmige Aufzeichnungsträger verwendende Aufzeichnungs- und Wiedergabegeräte. Darüber hinaus ist die Anwendung der qualitativ hochwertigen Abtastfrequenzumsetzung mit einer analoge Signale verarbeitenden Zwischenstufe auch im Zusammenhang mit digitalem Satellitenrundfunk möglich, der gleichermaßen eine Abtastfrequenzumsetzung erfordert.

Nachfolgend wird die Erfindung anhand von Zeichnungen näher erläutert.

Es zeigen:
- Fig.1: Blockschaltbild eines erfindungsgemäßen Aufzeichnungs- und Wiedergabegerätes und
- Fig.2: Blockschaltbild eines bekannten digitalen Aufzeichnungs- und Wiedergabegerätes.

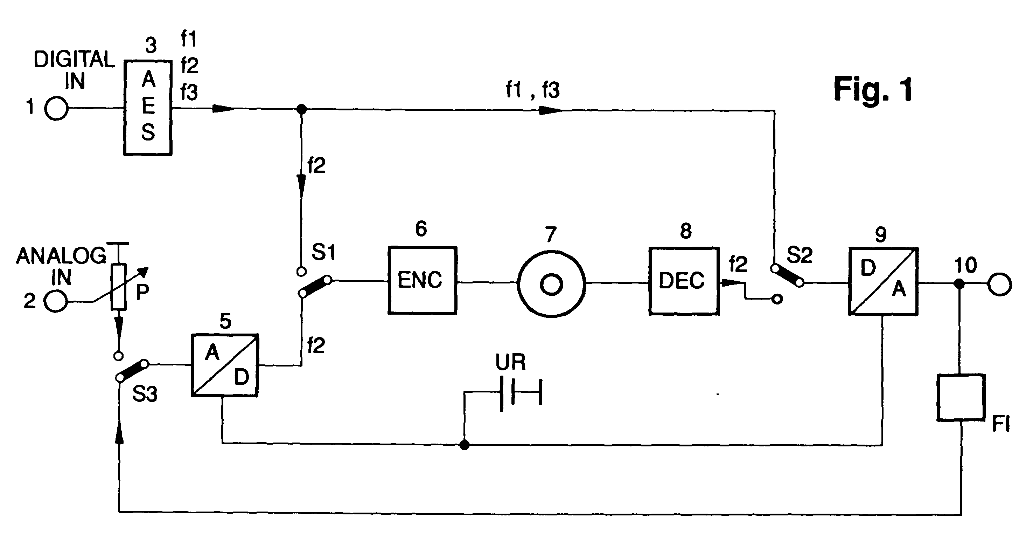

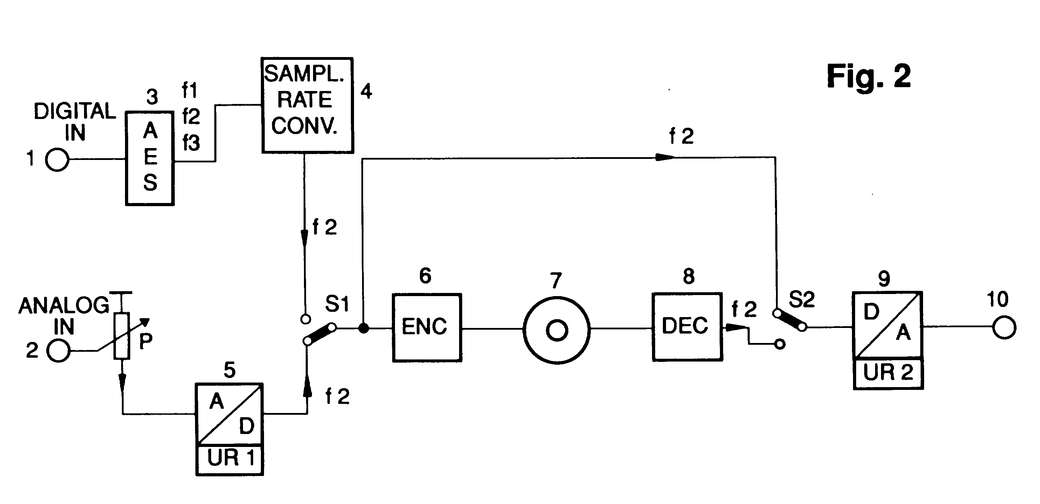

Dabei werden die Bezugszeichen in den Figuren 1 und 2 entsprechend verwendet, so daß sie äquivalente Baugruppen oder Eigenschaften kennzeichnen.

Gemäß dem in Fig.1 dargestellten Blockschaltbild eines erfindungsgemäßen Aufzeichnungs- und Wiedergabegerätes werden in vorteilhafter Weise der in einem digitalen Aufzeichnungs- und Wiedergabegerät generell vorhandene D/A-Wandler 9 und A/D-Wandler 5 zum Aufzeichnen von digitalen Signalen unterschiedlicher Abtastfrequenz über einen Digitalsignaleingang 1 verwendet. Um digitale Signale unterschiedlicher Quellen bzw. unterschiedlicher Abtastfrequenz, wie beispielsweise vom digitalen Rundfunk mit f1 = 32 kHz oder einem DAT-Recorder mit f3 = 48 kHz auf einer MOD, bei der eine Aufzeichnungs- bzw. Abtastfrequenz von f2 = 44,1 kHz verwendet wird, aufzeichnen zu können, ist eine Umsetzung auf die Abtastrate bzw. Abtastfrequenz f2 erforderlich. Bekannte digitale Aufzeichnungs- und Wiedergabegeräte mit einem digitalen Signaleingang weisen hierzu Fig.2 entsprechend einen Sampling Rate Converter bzw. Abtastfrequenzumsetzer 4 auf, der am die Schnittstelle des Digitalsignaleingangs 1 bildenden AES-Receiver bzw. AES-Empfänger 3 angeschlossen ist oder ermöglichen das Aufzeichnen digitaler Signale nur von systemkonformen Geräten.
Die Abkürzung AES steht für Audio Engineering Society als genormte digitale Schnittstelle. Der AES-Empfänger 3 stellt dem Abtastfrequenzumsetzer 4 die entsprechende Abtastfrequenz f1 bzw. f2 oder f3 des digitalen Signals am Digitalsignaleingang 1 sowie die zugeordneten Quantisierungssignale bereit und der Abtastfrequenzumsetzer 4 berechnet dann die für das spezielle Aufzeichnungs- und Wiedergabegerät erforderlichen Quantiesierungswerte für die hier beispielhaft gewählte Abtastfrequenz f2, mit der auch einem Analogsignaleingang 2 zugeführte Informationssignale im digitalen Aufzeichnungs- und Wiedergabegerät verarbeitet werden. Analogsignale am Analogsignaleingang 2 werden hierzu über ein die Aussteuerung beeinflussendes Potentiometer P einem A/D-Wandler 5 zugeführt, der ein digitales Ausgangssignal mit der Abtastfrequenz f2 zur Aufzeichnung bereitstellt. Der analogen oder digitalen Signalquelle entsprechend wird dann über einen Umschalter S1 ein digitales Signal mit der Abtastfrequenz f2 einem Encoder bzw. einer Kodiereinrichtung 6 zum Aufzeichnen auf einen Informationsträger 7 zugeführt. Der Informationsträger 7 ist in dem gewählten Beispiel eine magnetooptische Platte MOD, kann jedoch auch ein Magnetband, der Träger eines Sendersignals oder anderer Träger sein.
Zur Wiedergabe von auf einem Informationsträger aufgezeichneten Informationen ist im Aufzeichnungs- und Wiedergabegerät ein Decoder 8 vorgesehen, der ein digitales Ausgangssignal mit der Abtastfrequenz f2 einem D/A-Wandler 9 über einen Umschalter S2 zur Wiedergabe am Ausgang 10 bereitstellt. Insbesondere bei Studiogeräten ist der Ausgang 10 ebenfalls eine Normschnittstelle mit einer maximalen Ausgangsspannung von 0,775 Volt. Um diesen Wert zu gewährleisten, ist die interne Referenzspannungsquelle UR2 des D/A-Wandlers 9 mit dem maximalen Eingangsspannungswert verkoppelt, der noch aufgelöst werden soll.
Der Umschalter S2 ist insbesondere zum Mithören während des Aufzeichnens vorgesehen.
Der A/D-Wandler 5 und der D/A-Wandler 9 werden jeweils von einem integrierten Schaltkreis gebildet, die zur Anpassung an einen genormten Eingangs- bzw. Ausgangspegel jeweils eine interne Referenzspannungsquelle UR1 bzw. UR2 aufweisen, vgl. Valvo Technische Information zum 871011, S.33; Sony-Schaltkreiskatalog zum CX20018/CXA1144S oder Informationsblatt PDS-1084A zum PCM 1750 der Burr-Brown Corporation, Printed in U.S.A. December, 1990. Sie werden mit ihren internen Referenzspannungsquellen in bekannten Aufzeichnungs- und Wiedergabegeräten separat verwendet, vgl. Blockschaltbild zum R-DAT vom Typ DTC-12000ES von Sony.
Durch das erfindungsgemäße Verwenden des in jedem digitalen Aufzeichnungs- und Wiedergabegerät ohnehin vorhandenen D/A-Wandlers 9 und A/D-Wandlers 5 zum Umsetzen einer Abtastfrequenz f1, f3 oder einer anderen Abtastfrequenz f in eine systemeigene Abtastfrequenz f2 wird der zum Aufzeichnen eines digitalen Signals erforderliche Aufwand gesenkt und das Aufzeichnen digitaler Signale mit Aufzeichnungs- und Wiedergabegeräten ermöglicht, die zum Realisieren dieser Funktion weder einen digitalen Abtastfrequenzumsetzer 4 noch zusätzlich zu dem ebenfalls einen hohen Aufwand darstellenden vorhandenen D/A-Wandler 9 und A/D-Wandler 5 weitere D/A- oder A/D- Wandler benötigen. Hierzu wird Fig.1 entsprechend der Ausgang des im Aufzeichnungs- und Wiedergabegerät vorhandenen D/A-Wandlers 9 über ein Filter FI und einen Umschalter S3 mit den Eingang des A/D-Wandlers 5 verbunden. Das Filter FI ist dabei in bekannter Weise an die niedrigste der Abtastfrequenzen f1,f2,f3 angepaßt und kann gegebenenfalls in Abhängigkeit von der Abtastfrequenz f1,f3 am Digitalsignaleingang 1 umschaltbar ausgeführt werden. Weiterhin wird eine sowohl für den A/D-Wandler 5 als auch für den D/A-Wandler 9 gemeinsame Referenzspannung UR verwendet, um eine Übereinstimmung der Aussteuerbereiche des D/A-Wandlers 9 und des A/D-Wandlers 5 zu gewährleisten. Die Vollaussteuerung des D/A-Wandlers 9 muß der Vollaussteuerung des A/D-Wandlers 5 entsprechen. Eine Übersteuerung des A/D-Wandlers 5 ist aufgrund damit verbundener Signalverzerrungen und Informationsverluste absolut zu vermeiden und eine Untersteuerung führt zu Dynamikverlusten. Da intern gebildete Referenzspannungsquellen UR1 und UR2 trotz einer bisher nicht üblichen Übereinstimmung beispielsweise infolge unterschiedlicher Drift zu einer Abweichung zwischen den Aussteuerbereichen führen könnte, wird in der Ausführung eine gemeinsame Referenzspannungsquelle UR bevorzugt. Es sind für das Erreichen einer der digitalen Abtastfrequenzumsetzung entsprechenden Qualität, durch welche Mittel auch immer, eine Übereinstimmung der Aussteuerbereiche und das Verhindern von Fremdsignaleinstreuungen zu gewährleisten. Deshalb ist die bevorzugte Ausführung des A/D-Wandlers 5 und des D/A-Wandlers 9 in einem Schaltkreis vorgesehen.
Zur Aufzeichnung oder Umsetzung eines digitalen Signals am Digitalsignaleingang 1 wird das digitale Signal Fig.1 entsprechend über den die digitale Schnittstelle bildenden AES-Empfänger 3 und den Umschalter S2 dem ohnehin vorhandenen D/A-Wandler 9 zugeführt, der in vorteilhafter Weise mit dem ebenfalls vorhandenen A/D-Wandler 5 einen Abtastfrequenzumsetzer mit analoger Zwischenstufe von besonderer Qualität bildet.
Die Anwendung wurde anhand von Aufzeichnungs- und Wiedergabegeräten für Audiosignale erläutert, wobei die Anwendung jedoch auch auf andere digitale Signale übertragen werden kann und nicht auf Audiosignale beschränkt ist.

## Patentansprüche

1. Gerät zur Aufzeichnung (6, 7) und Wiedergabe (7, 8) von Digitalsignalen mit einer ersten Abtastfrequenz (f₂), enthaltend:
- einen Digitalsignal-Eingang (1) für Digitalsignale mit der ersten (f₂) oder einer zweiten, unterschiedlichen Abtastfrequenz (f₁, f₃), der im Fall von Digitalsignalen mit der ersten Abtastfrequenz diese für eine Aufzeichnung (6, 7) bereitstellt;
- einem Analogsignal-Eingang (2), dem ein A/D-Wandler (5) nachgeordnet ist, der mit der ersten Abtastfrequenz (f₂) arbeitet und analoge Eingangssignale für eine Aufzeichnung (6, 7) bereitstellt;
- einen vor einem Ausgang (10) des Geräts angeordneten D/A-Wandler (9), dem im Fall von Digitalsignalen mit der zweiten Abtastfrequenzumsetzung (f₁, f₃) Digitalsignaleingang vom Digitalsignal-Eingang (1) zugeführt werden und dessen analoges Ausgangssignal in dem A/D-Wandler (5) in Digitalsignale mit der ersten Abtastfrequenz (f₂) umgesetzt wird, dadurch **gekennzeichnet**, daß der A/D-Wandler (5) und der D/A-Wandler (9) zum Gewährleisten übereinstimmender Aussteuer-Bereiche an eine gemeinsame Referenzspannungsquelle (UR) angeschlossen sind.

2. Gerät nach Anspruch 1, in dem das dem A/D-Wandler (5) zugeführte analoge Ausgangssignal des D/A-Wandlers (9) ein Filter (FI) durchläuft, welches an die niedrigste der Abtastfrequenzen angepaßt ist oder in Abhängigkeit von der Abtastfrequenz umschaltbar ist.

3. Gerät nach Anspruch 1 oder 2, in dem die Digitalsignale am Digitalsignal-Eingang (1) zunächst einen eine digitale Schnittstelle bildenden AES-Empfänger (3) durchlaufen.

4. Gerät nach einem der Ansprüche 1 bis 3, in dem der A/D-Wandler (5) und der D/A-Wandler (9) zum Verhindern von Fremdsignal-Einstreuungen in einem Schaltkreis angeordnet sind.

5. Gerät nach einem der Ansprüche 1 bis 4, in dem die erste Abtastfrequenz (f₂) 44,lkHz und die zweite Abtastfrequenz (f₁, f₃) 32kHz oder 48kHz ist.

6. Verfahren zur Aufzeichnung (6, 7) und Wiedergabe (7, 8) von Digitalsignalen mit einer ersten Abtastfrequenz (f₂), bei dem:
- ein Digital-Eingangssignal (1) eine erste (f₂) oder eine zweite, unterschiedliche Abtastfrequenz (f₁, f₃) hat und im Fall der ersten Abtastfrequenz für eine Aufzeichnung (6, 7) bereitgestellt wird;
- oder ein Analog-Eingangssignal (2) über einen A/D-Wandler (5), der mit der ersten Abtastfrequenz (f₂) arbeitet, für eine Aufzeichnung (6, 7) bereitstellt wird;
- einem vor einem Wiedergabe-Ausgang (10) angeordneten D/A-Wandler (9) im Fall von Digital-Eingangssignalen mit der zweiten Abtastfrequenz (f₁, f₃) diese zugeführt werden und dessen analoges Ausgangssignal in dem A/D-Wandler (5) in Digitalsignale mit der ersten Abtastfrequenz (f₂) umgesetzt wird,
dadurch **gekennzeichnet**, daß der A/D-Wandler (5) und der D/A-Wandler (9) zum Gewährleisten übereinstimmender Aussteuer-Bereiche an eine gemeinsame Referenzspannungsquelle (UR) angeschlossen sind.

7. Verfahren nach Anspruch 6, bei dem zur Aufzeichnung ein plattenförmiger Informationsträger (7) verwendet wird.

8. Verfahren nach Anspruch 6, bei dem zur Aufzeichnung ein bandförmiger Informationsträger (7) verwendet wird.

9. Verfahren nach Anspruch 6, bei dem der Informationsträger (7) ein Informationsträger-Signal eines digitale Informationssignale übertragenden Senders ist.

## Claims

1. Apparatus for the recording (6, 7) and reproduction (7, 8) of digital signals at a first sampling frequency (f₂), containing:
- a digital signal input (1) for digital signals at the first (f₂) or a second, different sampling frequency (f₁, f₃), which input, in the case of digital signals at the first sampling frequency, makes the said signals available for recording (6, 7);
- an analogue signal input (2), downstream of which an A/D converter (5) is arranged which operates at the first sampling frequency (f₂) and makes analogue input signals available for recording (6, 7);
- a D/A converter (9), which is arranged upstream of an output (10) of the apparatus and to which, in the case of digital signals at the second sampling frequency (f₁, f₃), digital signals are fed from the digital signal input (1), and the analogue output signal of which D/A converter is converted in the A/D converter (5) into digital signals at the first sampling frequency (f₂), **characterized** in that the A/D converter (5) and the D/A converter (9) are connected to a common reference voltage source (UR) in order to ensure corresponding drive-level ranges.

2. Apparatus according to Claim 1, in which the analogue output signal of the D/A converter (9) that is fed to the A/D converter (5) passes through a filter (FI), which is matched to the lowest of the sampling frequencies or can be changed over as a function of the sampling frequency.

3. Apparatus according to Claim 1 or 2, in which the digital signals at the digital signal input (1) firstly pass through an AES receiver (3) forming a digital interface.

4. Apparatus according to one of Claims 1 to 3, in which the A/D converter (5) and the D/A converter (9) are arranged in one circuit in order to prevent extraneous signal interference.

5. Apparatus according to one of Claims 1 to 4, in which the first sampling frequency (f₂) is 44.1 kHz and the second sampling frequency (f₁, f₃) is 32 kHz or 48 kHz.

6. Method for the recording (6, 7) and reproduction (7, 8) of digital signals at a first sampling frequency (f₂), in which:
- a digital input signal (1) has a first (f₂) or a second, different sampling frequency (f₁, f₃) and, in the case of the first sampling frequency, is made available for recording (6, 7);
- or an analogue input signal (2) is made available for recording (6, 7) by means of an A/D converter (5), which operates at the first sampling frequency (f₂);
- in the case of digital input signals at the second sampling frequency (f₁, f₃), the said signals are fed to a D/A converter (9), which is arranged upstream of a reproduction output (10) and the analogue output signal of which is converted in the A/D converter (5) into digital signals at the first sampling frequency (f₂),
**characterized** in that the A/D converter (5) and the D/A converter (9) are connected to a common reference voltage source (UR) in order to ensure corresponding drive-level ranges.

7. Method according to Claim 6, in which an information carrier (7) in disc/disk form is used for recording.

8. Method according to Claim 6, in which an information carrier (7) in tape form is used for recording.

9. Method according to Claim 6, in which the information carrier (7) is an information carrier signal of a transmitter transmitting digital information signals.

## Revendications

1. Appareil pour l'enregistrement (6, 7) et la reproduction (7, 8) de signaux numériques avec une première fréquence d'échantillonnage (f2), comprenant :
- une entrée de signal numérique (1) pour des signaux numériques avec la première fréquence d'échantillonnage (f2) ou une deuxième fréquence d'échantillonnage différente (f1, f3), qui dans le cas de signaux numériques à la première fréquence d'échantillonnage les produit pour un enregistrement (6, 7) ;
- une entrée de signal analogique (2), suivie par un convertisseur A/N (5), qui fonctionne à la première fréquence d'échantillonnage (f2) et fournit des signaux d'entrée analogiques pour un enregistrement (6, 7) ;
- un convertisseur N/A (9) placé avant une sortie (10) de l'appareil, auquel sont transmis dans le cas de signaux numériques à la deuxième fréquence d'échantillonnage (f1, f3) les signaux numériques de l'entrée de signal numérique (1), et dont le signal de sortie analogique est converti dans le convertisseur A/N (5) en signaux numériques à la première fréquence d'échantillonnage (f2), **caractérisé en ce que** le convertisseur A/N (5) et le convertisseur N/A (9) sont reliés à une source de tension de référence commune (UR) pour garantir des gammes dynamiques concordantes.

2. Appareil conformément à la revendication 1, dans lequel le signal de sortie analogique du convertisseur N/A (9) transmis au convertisseur A/N (5) passe par un filtre (FI) adapté à la plus basse des fréquences d'échantillonnage ou commutable selon la fréquence d'échantillonnage.

3. Appareil conformément à la revendication 1 ou 2, dans lequel les signaux numériques à l'entrée de signal numérique (1) traversent d'abord un récepteur AES (3) formant une interface numérique.

4. Appareil conformément à une des revendications 1 à 3, dans lequel le convertisseur A/N (5) et le convertisseur N/A (9) sont montés en circuit de commutation pour éviter les interférences de signaux étrangers.

5. Appareil conformément à une des revendications 1 à 4, dans lequel la première fréquence d'échantillonnage (f2) est de 44,1 kHz et la deuxième fréquence d'échantillonnage (f1, f3) de 32 kHz ou 48 kHz.

6. Procédé pour l'enregistrement (6, 7) et la reproduction (7, 8) de signaux numériques avec une première fréquence d'échantillonnage (f2), pour lequel :
- un signal d'entrée numérique (1) a une première fréquence d'échantillonnage (f2) ou une deuxième fréquence d'échantillonnage différente (f1, f3) et qui dans le cas de la première fréquence d'échantillonnage est fourni pour un enregistrement (6, 7) ;
- ou un signal d'entrée analogique (2) est fourni pour un enregistrement (6, 7) via un convertisseur A/N (5) qui fonctionne à la première fréquence d'échantillonnage (f2) ;
- dans le cas de signaux d'entrée numériques à la deuxième fréquence d'échantillonnage (f1, f3), ceux-ci sont transmis à un convertisseur N/A (9) placé avant une sortie de reproduction (10), convertisseur N/A (9) dont le signal de sortie analogique est converti par le convertisseur A/N (5) en signaux numériques à la première fréquence d'échantillonnage (f2),
**caractérisé en ce que** le convertisseur A/N (5) et le convertisseur N/A (9) sont reliés à une source de tension de référence commune (UR) pour garantir des gammes dynamiques concordantes.

7. Procédé conformément à la revendication 6, pour lequel un support d'information (7) en forme de disque est utilisé pour l'enregistrement.

8. Procédé conformément à la revendication 6, pour lequel un support d'information (7) sous forme de bande est utilisé pour l'enregistrement.

9. Procédé conformément à la revendication 6, pour lequel le support d'information (7) est un signal porteur d'information d'un émetteur transmettant des signaux d'information numériques.
